# EUROPÄISCHE PATENTANMELDUNG

(11) **EP 0 802 473 A1**
(43) Veröffentlichungstag der Anmeldung: **22.10.1997**
(21) Anmeldenummer: 96918696.4
(22) Anmeldetag: 14.06.1996
(51) Int. Cl.: G05D 23/32, F24H 9/20, F24D 19/10

(54) **PROGRAMMIERSYSTEM FÜR EINEN GASHEIZKÖRPER**

(30) Priorität: 06.11.1995 ES 9502160
(71) Anmelder: Mayordomo Vicente, Juan Miguel, 08950 Esplugues de Llobregat (ES)
(72) Erfinder: Mayordomo Vicente, Juan Miguel, 08950 Esplugues de Llobregat (ES)
(74) Vertreter: Flaccus, Rolf-Dieter, Dr.
(86) Internationale Anmeldenummer: ES9600132
(87) Internationale Veröffentlichungsnummer: WO9717644

(57) **Zusammenfassung**

Programmiersystem für einen beispielsweise gasgefeuerten Heizkörper. Ein Zeitschalter (1) ist mit einer Spannungsquelle (2) verbunden und andererseits mit primären Betätigungsmedien (3), die eine Temperatur erzeugen, welche sekundäre Emfängermedien (4) beeinflußt, die gegenüber dieser Temperatur empfindlich sind und durch die die konventionellen Medien (6) für den internen Betrieb des Wandheizkörpers (5) betätigt werden. Die Erfindung ermöglicht die Auswahl eines Betriebszeitraums des Heizkörpers entsprechend den üblichenen An- und Abwesenheitszeiträumen der Bewohner.

## Beschreibung

Das vorliegende Erfindungspatent betrifft ein Programmiersystem für einen Gasheizkörper oder ähnliche Elemente, das zu der ihm bestimmten Funktion verschiedene Vorteile hinzufügt, die weiter unten aufgeführt werden, abgesehen von anderen seiner Organisation und Gestaltung innewohnenden.

Bestandteil des gegenwärtigen Standes der Technik sind die automatischen Einrichtungen, die zur Durchführung der Temperaturregelung der Beizkörper, einschließlich Gas-Wandheizkörper, verwendet werden.

Bei Gas-Wandheizkörper, der bei dieser Art von Heizung verwendet wird, ist es eine bekannte Praxis, Fühlermittel für die in Raum herrschende Umgebungstemperatur einzusetzen, durch die interne Betätigungsmedien des Heizkörpers ein- oder ausgeschaltet werden. In dieser Form wird die Aufrechterhaltung einer stabilen Temperatur innerhalb optimaler und für den Benutzer gesunder Bereiche erzielt; allerdings sind bein gegenwärtigen Stand der Technik in bezug auf Gas-Wandheizkörper keine Medien bekannt, durch die es möglich wird, den Betrieb des Heizkörpers für eine vorbestimmte Uhrzeit und einen vorbestimmten Zeitraum zu programmieren, um eine beträchtliche Energieeinsparung zu erreichen.

Der Anmelder des vorliegenden Erfindungspatents hat ein Programmiersystem für einen Gasheizkörper für den Wandanbau entwickelt, mit dem es möglich ist, den Betrieb in vom Benutzer ausgewählten Zeiträumen zu programmieren, wodurch er während seiner Anwesenheit eine angenehme Temperatur genießen und während seiner Abwesenheit eine spürbare Verbesserung der Wirtschaftlichkeit durch die Energieeinsparurg erreichen kann.

Allgemein gesagt, umfaßt das System einen an das elektrische Netz oder eine beliebige andere Energiequelle angeschlossenen Zeitschalter, der primäre Medien zur Erzeugung eines Mikroklimas aktiviert, das ausschließlich der Feststellung durch andere sekundäre Empfängermedien vorbehalten ist, die im Heizkörper eingebaut und an die konventionellen Betätigungsmedien dem genannten Heizkörpers angeschlossen sind.

Das vorliegende Erfindungspatent bietet die vorstehend beschriebenen Vorteile, neben anderen, die sich einfaah aus dem Realisierungsbeispiel eines Programmiersystems für einen Heizkörper ableiten, das im folgenden ausführlicher beschrieben wird, um das Verständnis der oben dargestellten Merkmale zu erleichtern, wobei gleichzeitig diverse Details bekanntgegeben und zu diesem Zweck der vorliegenden Beschreibung einige Zeichnungen beigefügt werden, in denen nur mit Beispielcharakter und ohne Einschränkung des Umfangs dieser Erfindung ein praktischer Fall des Gegenstands derselben vorgestellt wird.

In den Zeichnungen:

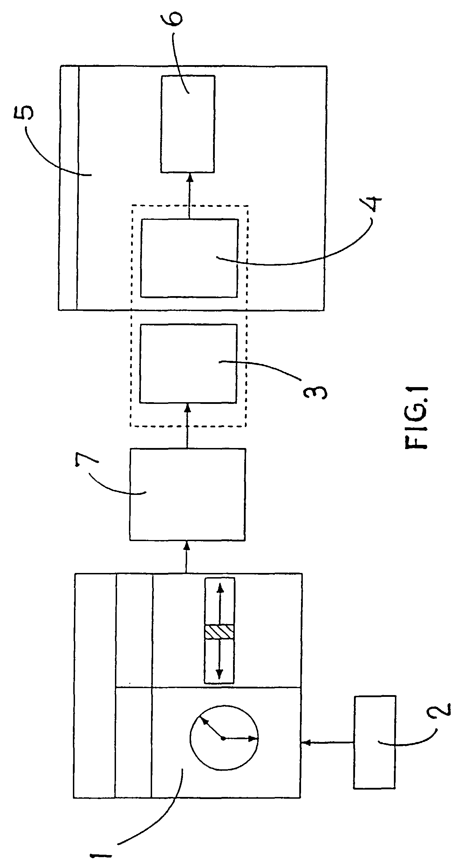

Abbildung 1 stellt ein Funktions-Blockdiagramm des Programmiersystems für einen Gas-Wandheizkörper dar.

Entsprechend der Darstellung in der Zeichnung umfaßt das System, das Gegenstand der vorliegenden Erfindung ist, in Übereinstimmung mit einer Reslisierung desselben ein Zeitschaltelement, im Schema durch eine -1- gekennzeichnet, angeschlossen an eine Energieversorgungsquelle -2-, dessen Element -1- mit primären Medien -3- oder einem Betätigungselement in Verbindung steht, das eine Temperatur erzeugt, die ausschließlich ihrer Feststellung durch andere sekundäre Medien -4- vorbehalten ist, die bin Empfangs- oder Fühlerelement bilden, welches im Gas-Wandheizkörper -5- eingebaut ist und die konventioneller Medien -6- zur internen Betätigung des genannten Heizkörpers -5- aktiviert.

Zwischen dem Zeitschalter -1- und dem Betätigungselement -3- werden Medien -7- zur Anpassung des energetischen Signals eingefügt, falls dies für die Funktion des Systems erforderlich ist.

Beim Betätigungselement -3- kann es sich um einen elektrischen Widerstand handeln, war jedoch ohne einschränkenden Charakter angegeben wird.

Das Empfangs- oder Fühlerelement -4- kann ein Thermostat oder ein anderes Element zur Feststellung der Umgebungstemperatur sein.

Entsprechend dem dargestellten System wählt der Benutzer die Betriebsseiträume des Heizkörpers aus, die praktisch mit seinen Anwesenheitszeiten übereinstimmen, wodurch er vom Anfang seines Anfenthalts an eine angenehme Umgebungstemperatur genießen kann, ohne Wartezeiten für das Aufheizen, wie sie im Moment üblich sind. Mit anderen Worten, der Benutzer programmiert das System mit Hilfe des Zeitschalters, wobei durch den Wärmeaintrag zum Fühlerelement, das die Temperatur analysiert, eine bestimmte Information übermittelt und der Wert der Umgebungstemperatur verfälscht wird, mit dem Ziel, das mit Gas oder einem anderen Brennstoff batriebene Heizungssystem während eines Zeitraums in Betrieb zu setzen, der durch die eingestellten Zyklen des Zeitschalters bestimmt wird.

Die Erfindung kann ihrem Wesen nach in anderen Realisierungsformen in die Praxis überführt werden, die im Detail von der in der Beschreibung beispielhaft dargestellten Form abweichen, und die ebenfalls unter den angmeldeten Schutz fallen. Sie kann also unter Verwendung von geeigneteren Materialien und Medien hergestellt werden, da all dies in den Ansprüchen enthalten ist.

## Patentansprüche

1. PROGRAMMIERSYSTEM FÜR EINEN GASHEIZKÖRPER oder andere ähnliche Elemente, dadurch gekennzeichnet, daß es ein Zeitschaltelement (1) enthält, das an eine Energieversorgungsquelle (2) angeschlossen ist, dessen Zeitschaltelement mit Betätigungsmedien (3) in Verbindung steht, durch die eine Temperatur erzeugt wird, die der direkten Beeinflussung von Empfängermedien (4) vorbehalten ist, welche für diese Temperatur empfindlich sind und die ihrerseits mit den konventionellen Medien (6) für den Betrieb eines Wandheizkörpers (5) verbunden sind, wobei es die letzteren sind, die die grundsätzliche Funktion des Heizkörpers oder ähnlicher Elemente ausmachen.

2. PROGRAMMIERSYSTEM FÜR EINEN GASHEIZKÖRPER oder andere ähnliche Elemente gemäß Anspruch 1, dadurch gekennzeichnet, daß zwischen dem Zeitschalter (1) und den Betätigungsmedien (3) Medien (7) eingefügt werden, die die Anpassung des energetischen Signals ermöglichen.

3. PROGRAMMIERSYSTEM FÜR EINEN GASHEIZKÖRPER oder andere ähnliche Elemente gemäß Anspruch 1, dadurch gekennzeichnet, daß das Empfänger- oder Fühlerelement (4) aus einem Thermostat oder einem anderen Element ähnlicher Funktion besteht.

4. PROGRAMMIERSYSTEM FÜR EINEN GASHEIZKÖRPER
